# EUROPÄISCHE PATENTANMELDUNG

(11) **EP 2 940 648 A1**
(43) Veröffentlichungstag der Anmeldung: **04.11.2015**
(21) Anmeldenummer: 15020064.0
(22) Anmeldetag: 27.04.2015
(51) Int. Cl.: G06Q 50/06, H02J 3/14

(54) **KÜHLGERÄT MIT ELEKTRISCHER SCHALTUNG ZUR FERNGESTEUERTEN KONTROLLE DER KÜHLPHASEN**

(30) Priorität: 30.04.2014 CH 648142014
(71) Anmelder: Orth, Christoph Peter, 4055 Basel (CH)
(72) Erfinder: Orth, Christoph Peter, 4055 Basel (CH)

(57) **Zusammenfassung**

Ein Kühlschrank, Gefrierschrank oder anderes elektrisch betriebenes Gerät welches nur zu bestimmten, variablen Zeiten elektrische Energie benötigt, ist mit einer elektronischen Schalteinheit ausgestattet, welche es erlaubt, diese Zeiten auf äussere Einflüsse, wie zum Beispiel einen stündlich variierenden Strompreis, oder eine variierende Stromproduktion aus regenerativen Energiequellen, einzustellen.

## Beschreibung

### Gebiet der Erfindung:

Die Erfindung betrifft elektrisch betriebene Geräte, in erster Linie Kühlschränke und Gefrierschränke, oder elektrisch betriebene Boiler, oder gewerblich genutzte Geräte aus der Kühl- und Wärmetechnik, die nur zu bestimmten, nicht direkt vom Benutzerverhalten abhängigen Zeiten, elektrische Energie beziehen.

### Hintergrund:

Die Stromproduktion durch regenerative Energiequellen, ebenso wie der Strompreis an der Strombörse EEX, unterliegt natürlichen Schwankungen. Die Erfindung erlaubt es, dass sich solche Geräte wie oben aufgeführt, mit ihrem Lastgang an diese Schwankungen anpassen. Dadurch kann zum Beispiel Energie von den Geräten zu günstigeren Preisen bezogen werden.

### Darstellung:

Die unter [0001] genannten Geräte enthalten mindestens eine Antenne und einen oder mehrere integrierte Schaltkreise.

Mit Hilfe der Antenne wird dem Gerät über eine Funkverbindung mitgeteilt, wann es von Vorteil ist, Last aufzunehmen.

Die Schaltkreise können auch mit Sensoren, z.B. Temperatursensoren im Inneren des Kühlraums eines Kühlschranks, verbunden sein.

Die gesamte elektrische Schaltung erlaubt es, den Lastgang des Gerätes zu steuern.

Das Funksignal richtet sich nicht nur an ein einzelnes Gerät, sondern wird mit Hilfe von Sendemasten an ganze Gruppen von verschiedenen Geräten in einem Sendegebiet übertragen.

Die gesteuerten Geräte sind in erster Linie Kühlschränke und Gefrierschränke, können aber auch Geräte mit Akkumulatoren oder vergleichbaren Technologien sein.

### Möglichkeit der Realisierung der Erfindung:

Ein Kühl- oder Gefriergerät wird mit einer Antenne für UKW-Frequenzen ausgestattet.

Die Frequenz kann zum Beispiel im Bereich des VHF-2 Bandes liegen.

Ein Dienst, ähnlich dem Traffic Management Channel zur Datenübertragung an Navigationsgeräte, stellt digitalisierte Informationen zum Strompreis oder zur Produktion von Strom aus regenerativen Energiequellen auf dieser Frequenz bereit.

Die Antenne empfängt diese Signale und leitet sie an eine elektrische Schaltung.

Ein im Kühlraum des Geräts integrierter Temperatursensor ist ebenfalls mit dieser Schaltung verbunden.

Die Schaltung ist mit dem Kompressor des Kühl- oder Gefriergeräts verbunden und kann diesen an- und ausschalten.

Ein IC in der Schaltung ermittelt aus den per Funk empfangenen Daten und der Temperatur einen optimierten Kühlrythmus für den Kompressor und schaltet diesen entsprechend an und aus.

Der Kühlrythmus wird so verändert, dass das Gerät verstärkt zu Zeiten Energie verbraucht, an denen der Strom günstig ist, oder zu denen besonders viel Strom aus regenerativen Energiequellen produziert wird.

## Patentansprüche

1. Ein elektrisch betriebenes Haushaltsgerät ist mit einer Antenne und einer Elektronik ausgestattet. Das Gerät empfängt darüber ein von einem regionalen Funkmast ausgestrahltes Signal mit Strompreisinformationen. Das Signal richtet sich gleichzeitig an eine grosse Menge von Geräten, Grössenordnung über 1000. Die Elektronik berechnet aus diesen Informationen, dem momentanen Zustand des Gerätes und aus gerätespezifischen Parametern ein optimiertes Verhalten des Gerätes in Bezug auf das Preissignal und schaltet das Gerät gemäss dieser Berechnung.

2. Ein Gerät nach Anspruch [0001], wobei das Gerät ein Kühlschrank oder Gefrierschrank oder eine Kombination aus beidem ist.

3. Ein Gerät nach Anspruch [0001], wobei das Gerät ein Boiler ist.

4. Ein Gerät nach Anspruch [0001], wobei das Gerät eine Waschmaschine, Spühlmaschine oder Wäschetrockner ist.

5. Ein Gerät nach Anspruch [0001], wobei das Gerät ein elektrisches Fahrrad, elektrischer Motorroller oder elektrischer Rollstuhl ist.

6. Ein Gerät nach Anspruch [0001], wobei das Gerät ein Rasenmäher Roboter oder Staubsauger Roboter ist.

7. Ein Gerät nach Anspruch [0001], wobei das Gerät eine Schwimmbadpumpe oder Schwimmbadheizung ist.

8. Ein Gerät nach Anspruch [0001], wobei das Gerät eine Wärmepumpe ist.

9. Ein Gerät nach Anspruch [0001], wobei das Gerät eine Klimaanlage oder Lüftung oder Heizung oder Radiator oder ein Luftentfeuchter oder eine Saunaheizung ist.

10. Ein Gerät nach Anspruch [0001], wobei das Gerät ein Brotbackautomat, eine Eismaschine, ein Dörrautomat, eine Wärmeschublade, ein Wein-Klimaschrank, ein Wasserspender, eine Kaffeemaschine ist.

11. Ein Gerät nach Ansprüchen [0001] bis [0010], wobei das übertragene Signal nun Informationen über die Produktion von Strom aus erneuerbaren Energiequellen enthält und die Elektronik nun das Verhalten des Gerätes anhand dieser Informationen optimiert.
